# EUROPEAN PATENT SPECIFICATION

(11) **EP 1 224 426 B1**
(45) Date of publication and mention of the grant of the patent: **21.12.2005**
(21) Application number: 00969685.7
(22) Date of filing: 20.10.2000
(51) Int. Cl.: F24F 5/00, F24F 6/04

(54) **COOLING APPARATUS**
KÜHLVORRICHTUNG
APPAREIL DE REFROIDISSEMENT

(30) Priority: 21.10.1999 GB 9924802
(43) Date of publication of application: 24.07.2002
(73) Proprietor: The University of Nottingham, Nottingham NG7 2RD (GB); Ford, Brian Hoole, Dalston, London E8 1AP (GB)
(72) Inventor: FORD, Brian, Hoole, London E8 1AP (GB); RIFFAT, Saffa Bashir, Nottingham NG7 2RD (GB)
(74) Representative: Lock, Howard John
(86) International application number: PCT/GB2000/004025
(87) International publication number: WO 2001/029487

(56) References cited:
- WO-A-98/51972
- CH-A- 687 417
- FR-A- 979 944
- FR-A- 2 697 323
- US-A- 4 567 733
- US-A- 5 460 004

## Description

This invention relates to cooling apparatus. More particularly, but not exclusively, the invention relates to cooling apparatus for use in cooling an enclosed space, for example a building.

Modern society has an increase in dependence on air conditioning. However, conventional air conditioning systems consume large amounts of energy, which is produced at the expense of emissions of greenhouse gases into the atmosphere. In addition, chlorofluorocarbons (CFCs) have been used as the refrigerant for air conditioning systems over the past 60 years, but these are now known to contribute to the depletion of the ozone layer and to global warming. Environmental concerns on these matters have lead to interest in the development of environmentally friendly air conditioning systems.

Specification No. FR-A-979 944 discloses a cooling apparatus for cooling air. The apparatus comprises porous tubes for holding water and allowing the water to evaporate therefrom to cool the water held by the porous tubes.

According to one aspect of this invention there is provided a heat transfer apparatus for cooling a medium, the apparatus comprising a porous member for holding a refrigerant and allowing the refrigerant to evaporate therefrom to cool the refrigerant held by the porous member, and a heat pipe having first and second end regions, the first end region being arranged in thermal communication with the porous member and the second end region being arrangeable in thermal communication with the medium to be cooled, whereby evaporation of the refrigerant from the porous member cools the first end region of the heat pipe to cause the heat pipe to transfer heat from the second end region to the first end region thereby transferring heat from the medium and cooling said medium.

The medium may surround at least a part of the apparatus. In one embodiment, the apparatus may be substantially wholly surrounded by the medium.

In one embodiment, the porous member can be arranged in said thermal communication with the medium. Preferably, in this embodiment, heat can be transferred from the medium to the refrigerant holding means directly.

In one embodiment, for use with a gaseous medium in said thermal communication with at least a part of the apparatus, the porous member may be arranged to be surrounded by the gaseous medium, preferably, substantially wholly surrounded thereby. In this embodiment, heat can be transferred from the gaseous medium to the porous member, preferably directly.

Drive means may be provided to drive the gaseous medium over the refrigerant holding means, whereby upon evaporation of the refrigerant from the porous member, the gaseous medium is cooled. The drive means may be a fan.

The apparatus may further include drying means to dry the fluid medium prior to the passing of the fluid medium over the refrigerant holding means. The drying means may comprise a drying member, which may be in the form of a further holding means which may also comprise a porous member. A drying agent, for example a desiccant may be provided which may be in the form of an absorbent provided on the drying member. Absorbent supply means may be provided to supply absorbent to the drying member. The drying means may comprise a plurality of said drying members. Each of said drying members is preferably provided with the drying agent.

In another embodiment, the apparatus may include heat transfer means in thermal communication with the refrigerant holding means, wherein the heat transfer means can be arranged to be in thermal communication with said medium, whereby the heat transfer means can transfer heat from the medium to the porous member on evaporation of refrigerant from the refrigerant holding means.

Cooling apparatus for-cooling a medium may be provided, the apparatus comprising a refrigerant holding means and a heat pipe in thermal communication with the refrigerant holding means, and being adapted to be arranged in thermal communication with the medium, whereby a refrigerant can be provided on the refrigerant holding means such that on evaporation of the refrigerant, heat can be transferred from medium via the heat pipe to the refrigerant holding means.

Preferably, the heat pipe is arranged such that at least a part thereof can be surrounded by the medium. The heat pipe may be arranged such that the heat pipe is substantially wholly surrounded by the medium.

Preferably, the apparatus further includes means to supply the medium to the apparatus, whereby heat can be transferred from the medium to the refrigerant via the heat pipe. The means for supplying the medium may be a conduit, for example a conduit for a supply of a fluid material, preferably a gas, for example air.

Fins may be provided on the heat pipe to enhance the transfer of heat thereto, or therefrom. The refrigerant holding means may be in the form of a panel, which may be flat, or planar. Potentially, or in addition, the refrigerant holding means may be in the form of a container. In one embodiment, the container is substantially cylindrical in configuration.

The apparatus may comprise refrigerant supply means to supply refrigerant to the refrigerant holding means for evaporation therefrom. The refrigerant may comprise water.

Where the refrigerant holding means is a container, the refrigerant supply means may comprise a conduit to supply said refrigerant into the container. Alternatively, the refrigerant supply means may include means to spray said refrigerant over the refrigerant holding means; this is particularly suitable where the refrigerant holding means are in the form of panels which may be substantially, and enables the refrigerant holding means to be substantially wholly covered by a refrigerant. The spray means may comprise nozzles.

According to another aspect of this invention there is provided a method of cooling a medium, said method comprising providing apparatus as claimed in any preceding claim, arranging said heat pipe in thermal communication with the medium, providing a refrigerant on the porous member whereby evaporation of the refrigerant from the porous member, cools the first end of the heat pipe to cause the heat pipe to transfer heat from the second end to the first end, thereby transferring heat from the medium and cooling the medium.

The refrigerant holding means may comprise at least one porous member.

The medium may be in an enclosed space or may be in a conduit communicating with the enclosed space.

The enclosed space may comprise a room in a building, or may be a box to be kept cold, for example a refrigerator, or a cool-box for transporting food.

The refrigerant holding means may be provided inside the enclosed space, whereby evaporation of said refrigerant directly causes said cooling of the gaseous medium in the enclosed space. Alternatively, the refrigerant holding means may be outside the enclosed space in indirect thermal communication with said enclosed space, said communication may be by heat transfer means, for example a heat exchanger or heat pipe.

According to another aspect of this invention there is provided the use of apparatus as described above for cooling a medium, comprising providing said apparatus, arranging said heat pipe in thermal communication with the medium, providing a refrigerant on the porous member whereby evaporation of the refrigerant from the porous member cools the first end of the heat pipe to cause the heat pipe to transfer heat from the second end to the first end, thereby transferring heat from the first end and cooling the medium.

Embodiments of the invention will now be described by way of example only with reference to the accompanying drawings in which:-
Fig. 1 is a schematic view of a known heat transfer apparatus;
Fig.2 is a schematic view of one embodiment of heat transfer apparatus according to the invention;
Fig. 3 is a view of a heat transfer apparatus for use in indirect cooling in embodiments according to the invention;
Figs. 4 and 5 are alternative diagrammatic representations of heat transfer apparatus for use in cooling a room in embodiments according to the invention;
Fig. 6 is a diagrammatic representation of a further embodiment of heat transfer apparatus for use in cooling a room in embodiments according to the invention;
Fig. 7 is a schematic sectional view of heat transfer apparatus according to a further embodiment according to the invention;
Fig. 8 is an alternative to the embodiment according to the invention shown in Fig. 7;
Figs. 9 and 10 are schematic diagrammatic representations of heat transfer apparatus for cooling a box in accordance with the invention;
Fig. 11 is a schematic representation of heat transfer apparatus for use in direct cooling;
Fig. 12 is a sectional side view of a heat transfer apparatus employing drying means, utilising direct cooling;
Fig. 13 is a view along the lines XIII-XIII in Fig. 12;
Fig. 14 is a view of the apparatus as shown in Figs. 12 and 13 in one mode of operation;
Fig. 15 is a view of the apparatus shown in Figs. 12, 13 and 14 in another mode of operation;
Fig. 16 is a diagrammatic representation of a cooling unit employing direct evaporative cooling;
Fig. 17 is a diagrammatic representation of a cooling unit employing indirect evaporative cooling according to the invention;
Fig. 18 is a sectional side view of a building employing indirect evaporative cooling with heat transfer apparatus according to the invention;
Fig. 19 is a side view of a building similar to that shown in Fig. 18 but employing direct evaporative cooling with heat transfer apparatus; and
Fig. 20 is a perspective view of a porous panel for use in some of the embodiments according to the invention.

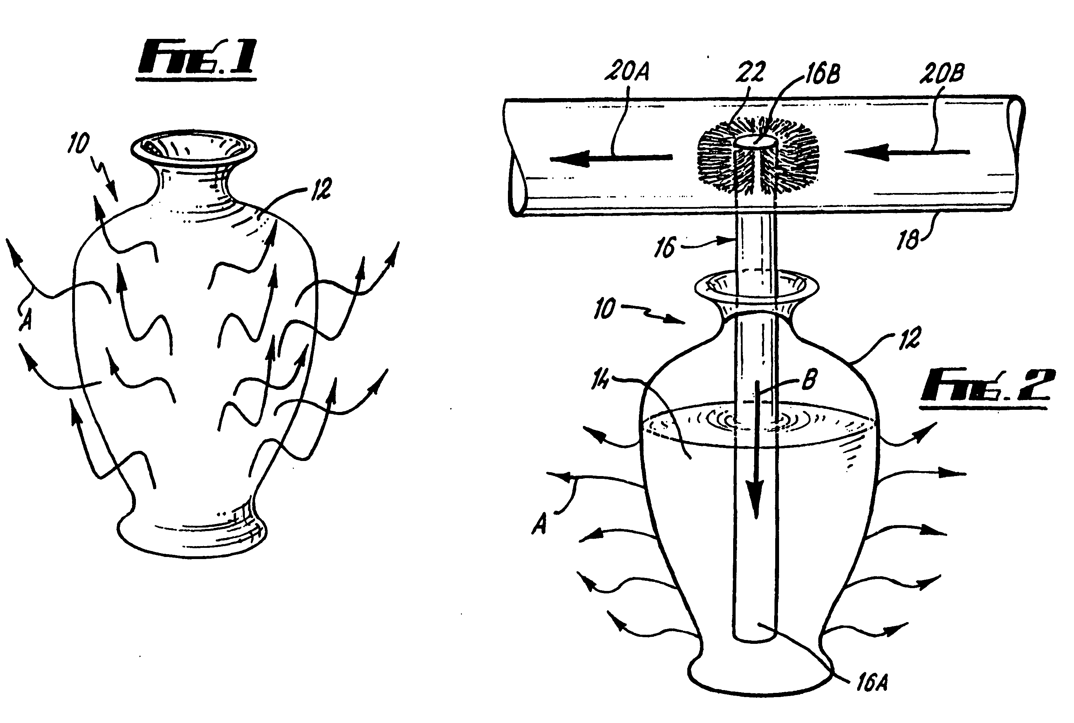

Referring to Fig. 1 there is shown diagrammatically known heat transfer apparatus 10, in the form of cooling apparatus, comprising a container 12 formed of a porous material, for example clay or other ceramic. A refrigerant, suitably water, is held within the container 10. The water is absorbed into the porous material and evaporates therefrom, as indicated by the arrows A. As the water evaporates, latent heat of evaporation is extracted from the air surrounding the container 12. This results in the air being cooled.

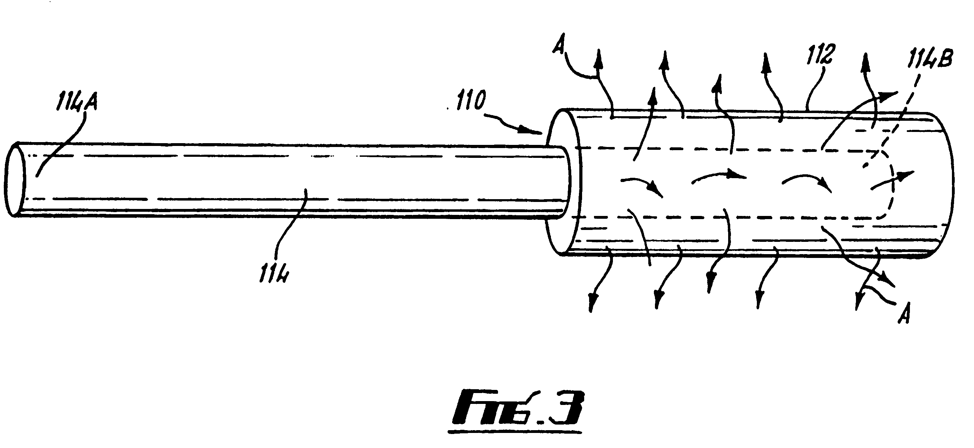

Referring to Fig. 2, there is shown schematically an embodiment of heat transfer apparatus 10 according to the invention comprising a container 12, formed of a porous material, for example clay or other ceramic material. The container 12 holds a refrigerant, namely water 14. A heat pipe 16 is provided within the container 12. One end region 16A is immersed in the water 14 in the container 12, and the other end region 16B is arranged within a conduit 18 through which air is directed, as shown by the arrows 20A, 20B. The air in the conduit 18 is intended to be used to cool a room (not shown).

The end 16B of the heat pipe 16 is provided with fins 22 which will assist in the transfer of heat, as will be explained below.

The water 14 is absorbed into the porous material of the container 12, and evaporates therefrom, as shown by the arrows A. This evaporation cools not only the air surrounding the container 12 but also the water 14 inside the container 12. In turn, this cools the end region 16A of the heat pipe 16.

As indicated by the arrow 20B, warm air is directed onto the end 16B of the heat pipe 16. Fins extending from the end region 16B enable heat to be transferred from the warm air impinging on the fins 22 to the end region 16B of the heat pipe 16. Thus, a temperature difference is established between the end 16A of the heat pipe 16 and the end 16B thereof. Thus, heat is extracted from the air in the conduit 18 and transferred from the end region 16B to the end region 16A, as indicated by the arrow B. Consequently, the warm air (as indicated by the arrow 20B) is cooled as it passes over the fins 22 and cold air passes therefrom, as indicated by the arrow 20A. The cold air is then passed into the room to be cooled.

Thus, it will be seen that the porous member 12 can be used for cooling purposes, either directly, as shown in Fig. 1, or indirectly, as shown in Fig. 2.

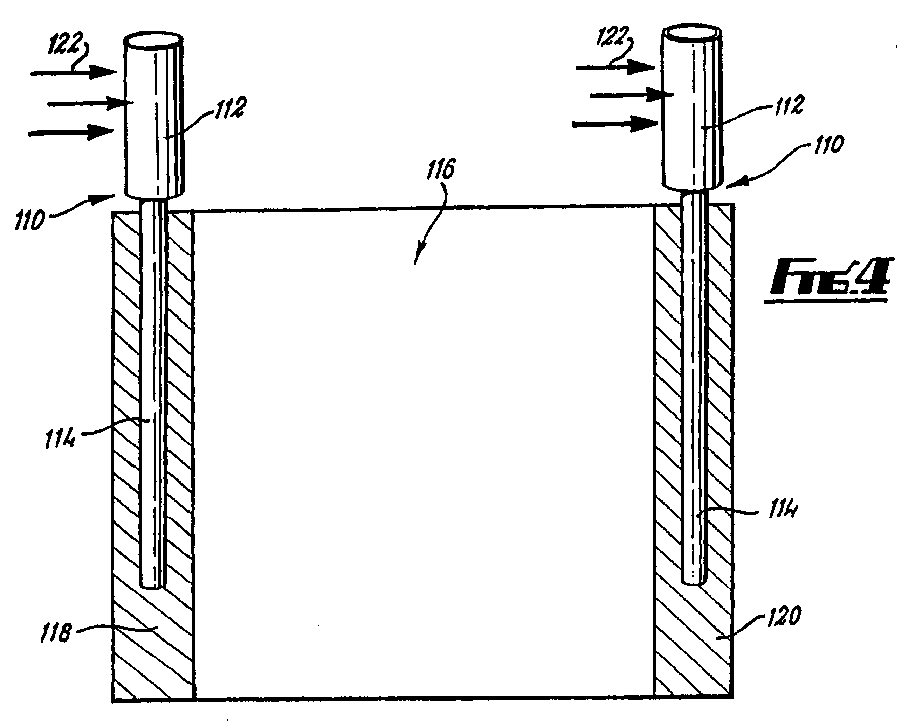

Fig. 3 shows an embodiment of heat transfer apparatus 110 according to the invention suitable for use in indirect cooling. The heat transfer apparatus 110 comprises a porous member 112, which can be in the form of a panel, or a container formed of a suitable porous material, for example clay or other material. The apparatus 110 also includes a heat pipe 114 having opposite end regions 114A, 114B, the end region 114B being provided inside or, in an alternative embodiment, in engagement with, the porous member 112. The heat pipe 114 thus extends outwardly from the porous member 112. In use, the heat transfer apparatus 110 is arranged such that a refrigerant, for example water is provided on the porous member 112, and the end region 114A is arranged in a place requiring cooling. Water evaporates from the porous member 112, as indicated by the arrows A, thereby cooling the end 114B of the heat pipe 114. Heat is transferred from the end region 114A to the end region 114B. Thus, the surroundings of the end region 114A are cooled.

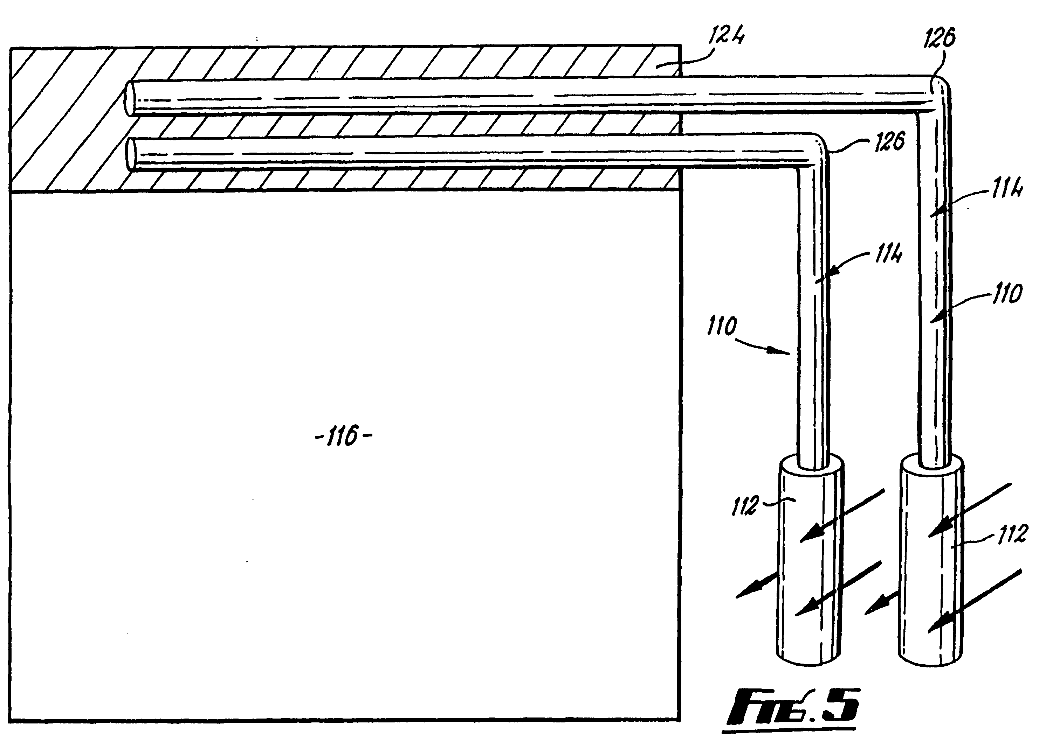

Referring to Figs. 4 to 10 there is shown uses of the apparatus 110 shown in Fig. 3.

In Fig. 4, a room 116 is shown schematically. The room 116 is defined by wall only two of which, designated 118 and 120, are shown. Inserted into each of the walls 118, 120 is a heat transfer apparatus 110. Each heat transfer apparatus 110 is inserted into the wall such that the heat pipe 114 is embedded into the wall throughout the majority of its length, with the exception of the part of its length which extends into the porous member 112.

Each porous member 112 is arranged outside the room 116, and is preferably outside the building in which the room 116 forms a part. Each porous member 112 is provided with refrigerant in the form of water. Water supply means, in the form of conduits (not shown) can also be provided to replenish water which has evaporated from the porous member 112.

A flow of air, as indicated by the arrows 122, across each of the porous members 112 enhances the evaporation of water from the porous members 112. Thus, a temperature difference is set up between the opposite end regions of the heat pipe 114, and heat is transferred from each of the walls 118, 120 by the heat pipe 114 to the porous members 112, thus cooling the walls 118, 120. The cooling of the walls 118, 120, in turn, cools the room 116.

It will be appreciated that the walls 118, 120 can each be provided with a plurality of heat transfer apparatus 110, arranged along each of the walls 118, 120.

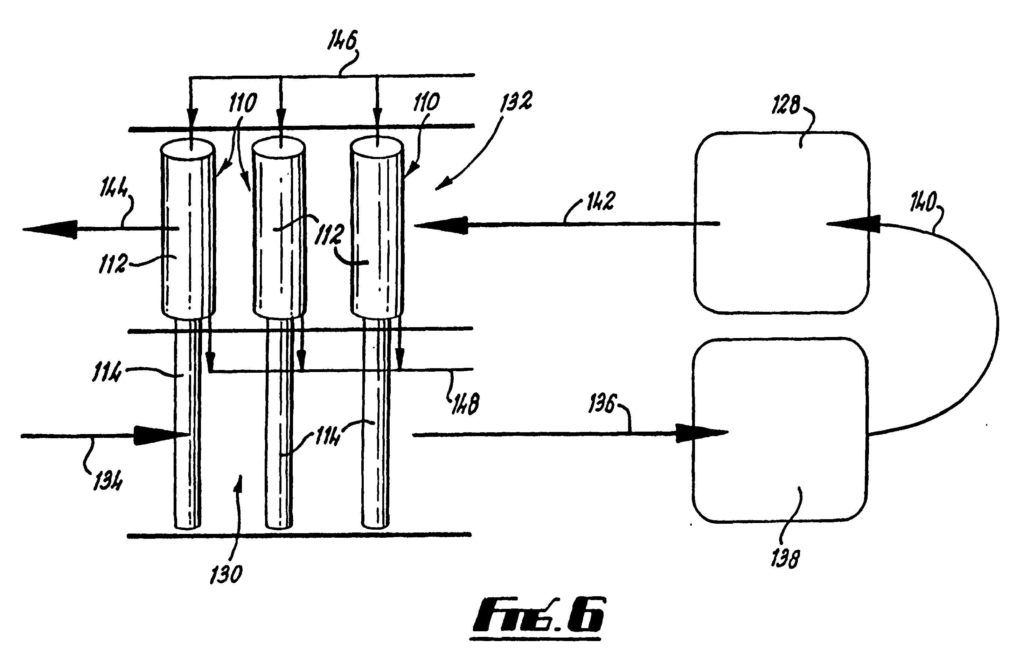

Referring to Fig. 5, there is shown a variation of the embodiment shown in Fig. 4, in which heat transfer apparatus 110 is used to cool a ceiling 124 of the room 116, rather than the side walls. Each of the apparatus 110 as shown in Fig. 5, comprises a porous member 112, and a heat pipe 114.

It will be appreciated that, although the embodiment shown in Fig. 5 shows heat pipes 114 extending around corners 126, the heat pipes could also be formed without corners 126, being substantially straight in configuration, or indeed any other suitable design or configuration. In operation, the arrangement shown in Fig. 5 works in the same way as the arrangement shown in Fig. 4, with the exception that the ceiling rather than the walls are cooled.

It will be appreciated, again, that the embodiment shown in Fig. 5 could comprise more than two of the apparatus 110 extending across the ceiling 124.

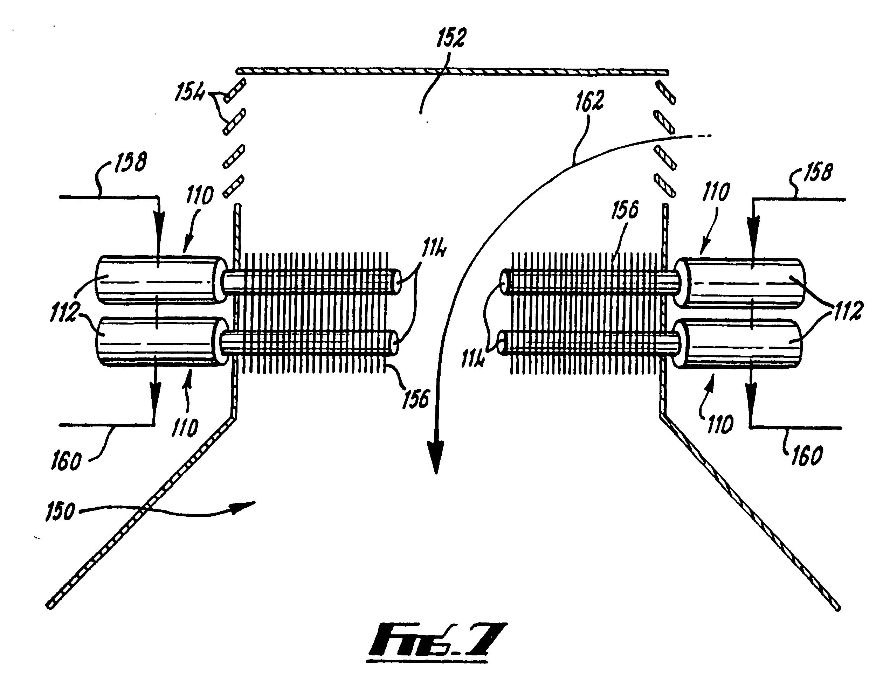

Referring to Fig. 6, there is shown a further embodiment of apparatus for cooling a room 128, which comprises a plurality of heat transfer apparatus 110, in which the heat pipes 114 thereof are arranged in a first conduit 130, and the porous members 112 thereof are arranged in a second conduit 132. Air from outside is passed into the conduit 130, in the direction of the arrow 134 whereby heat is extracted therefrom by the heat pipes 114 in the manner as described above. Cooled air is directed via the arrow 136 to an air conditioning unit 138 which directs the cooled air, as shown by the arrow 140 to the room 128. Warmed air from the room 128 is exhausted therefrom, as shown by the arrow 142 to pass into the second conduit 132, over the porous members 112, thereby enhancing the evaporation of water therefrom. After passing the porous members 112, the air is exhausted from the conduit 132, as shown by the arrows 144. The embodiment as shown in Fig. 6, is also provided with water supply means in the form of a plurality of pipes 146 to supply water to the porous members 112, and with drain means 148 to allow excess water to drain from the porous members 112.

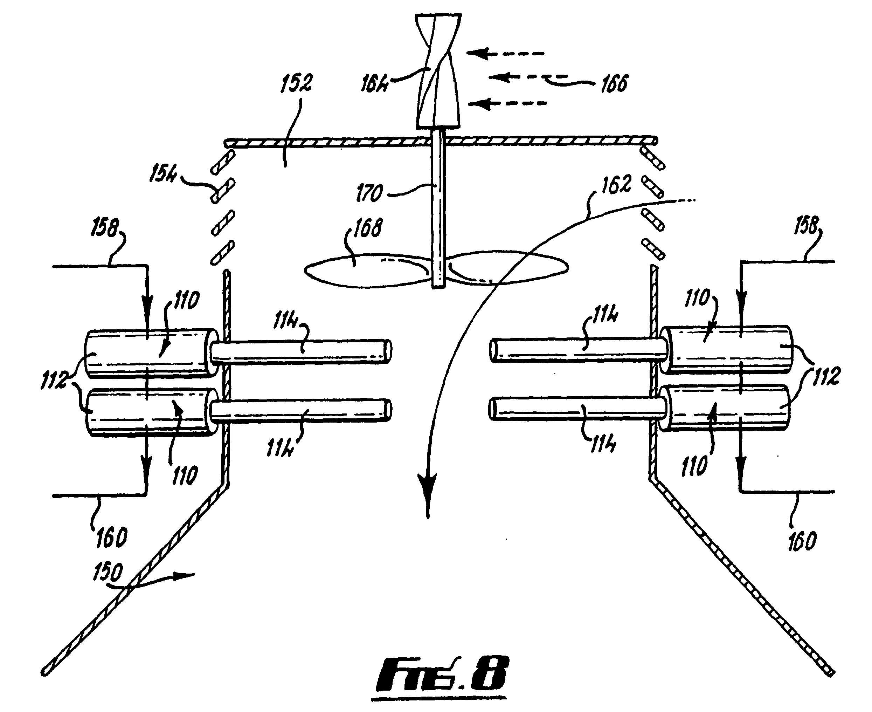

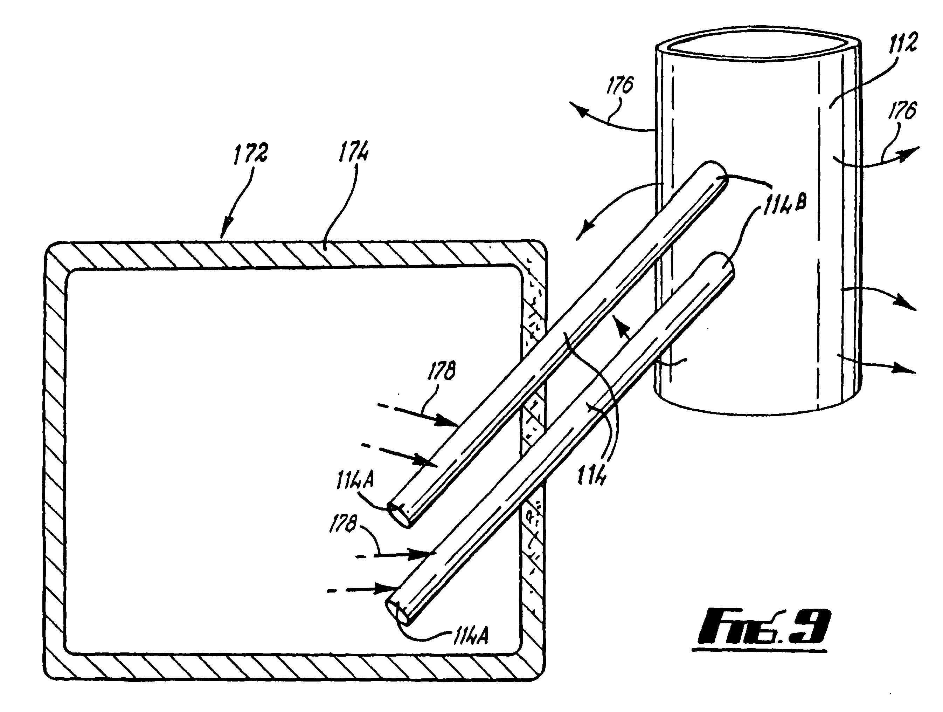

In Figs. 7 and 8, there is shown further uses of the heat transfer apparatus 110 for cooling buildings.

Referring to Figs. 7 and 8, there is shown a roof 150 of a building, the roof 150 having a raised portion 152 in which is provided a plurality of heat transfer apparatus 110. The raised portion 152 is also provided with louvers 154 which can be moved from a closed condition (not shown) to an open condition (as shown in Figs. 7 and 8).

The porous members 112 are provided outside the raised portion 152 of the roof 150, and the heat pipes 114 extend from the porous members through the wall of the raised portion 152 into the space therein. The heat pipes 114 of each of the heat transfer apparatus 110 are provided with ribs 156 to enhance the transfer of heat to the heat pipes 114.

Water supply means 158 are provided to supply water to the porous members 112, and drain means 160 are provided to drain water therefrom.

In operation, the wind outside the building forces air through the louvers 114, as indicated by the arrow 162. The air entering the raised portion 152 passes over the heat pipes 114. Water evaporating from the porous members 112 results in a reduction in temperature of the porous member and a transfer of heat along the heat pipes 114 to the porous members 112. Heat is thus extracted from the air passing through the raised portion 152 by the heat pipes 114, and transferred to the porous members 112. Thus, air entering via the louvers 154 is cooled. Cooled air from the raised portion 152 passes through the roof 150 to the rest of the building.

Referring to Fig. 8, a modification of the embodiment shown in Fig. 7 is provided, which includes air drive means in the form of a turbine 164 driven by the wind, as shown by the arrows 166, and a fan 168 connected to the turbine by a shaft 170. The wind drives round the turbine 164 which, in turn, turns the fan 168. This draws air through the louvers 154 and over the heat pipes 114.

As can be seen, the heat pipes 114 in Fig. 8 are not provided with ribs 156 to enhance heat transfer. The reason for this is because of the driving of the air through the louvers by the fan 16A. However, if desired, fins 156 could be provided.

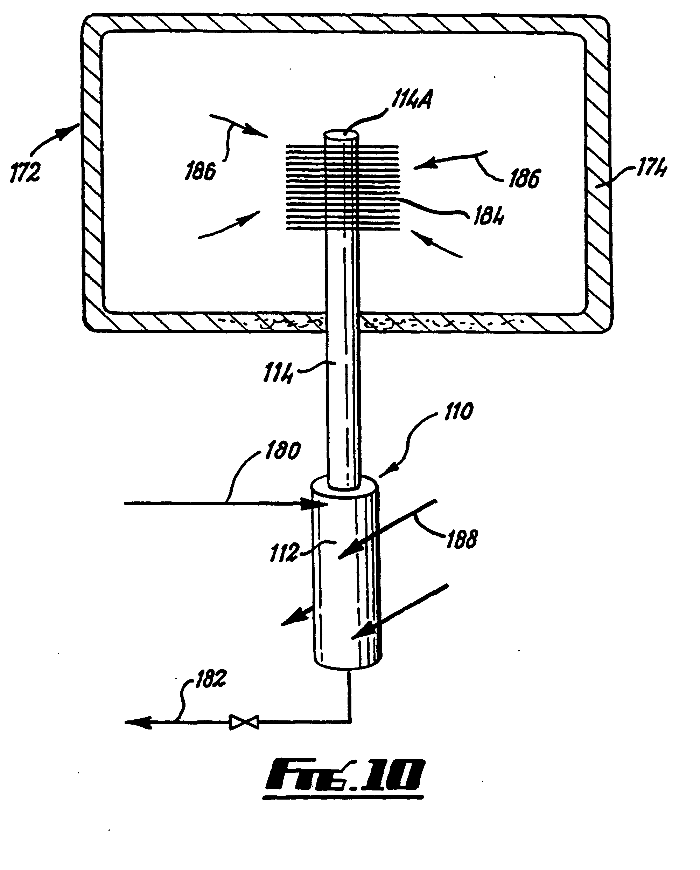

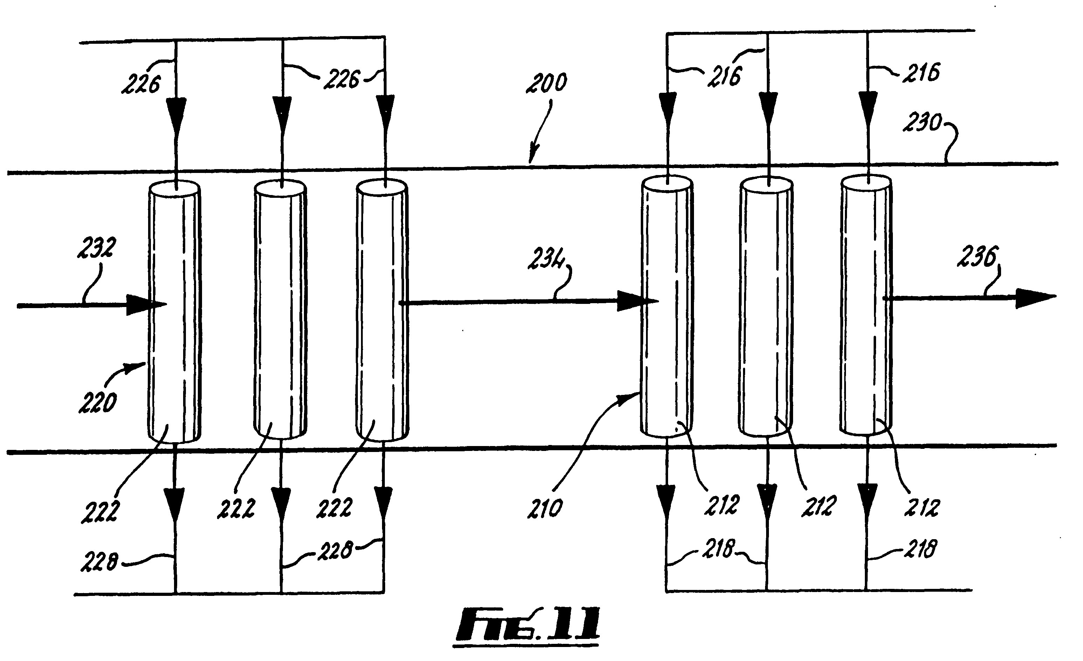

Referring to Figs. 9 and 10, there is shown an embodiment which is used to cool a box, for example a cold box, a refrigerator or a picnic box. In Fig. 9, a cold box 172 is provided which is defined by walls 174. A pair of heat pipes 114 extend from a porous member 112 through the walls 174 of the cold box 172 to the inside thereof. Water is held within the porous member 112.

The operation of the apparatus shown in Fig. 9 is the same as that described above, in that water evaporates from the porous member 112, as indicated by the arrows 176 thereby cooling the water in the porous member 112, and creating a temperature difference between the ends 114A, 114B of the heat pipes 114 whereby heat is transferred from the inside of the cold box to the heat pipes 114 as indicated by the arrows 178, thereby cooling the inside of the cold box. In order to maintain the inside of the box 172 cold, the walls 174 are insulated.

Referring to Fig. 10, there is shown a modification of the invention shown in Fig. 9, in which a single apparatus 110 is provided in which the heat pipe 114 is inserted through the wall 174 of the cold box 172. Water supply means 180 supplies water to the porous member 112 and water drain means 182 drains the water therefrom. Fins 184 are provided on the end region of the heat pipe 114 inside the box 172. Heat is extracted from the inside of the box via the fins 184, as indicated by the arrows 186 and transferred to the porous member 112 by the heat pipe 114. Air passing over the porous member 112, as indicated by the arrows 188, enhances evaporation of water therefrom. Thus, the inside of the box 172 is cooled.

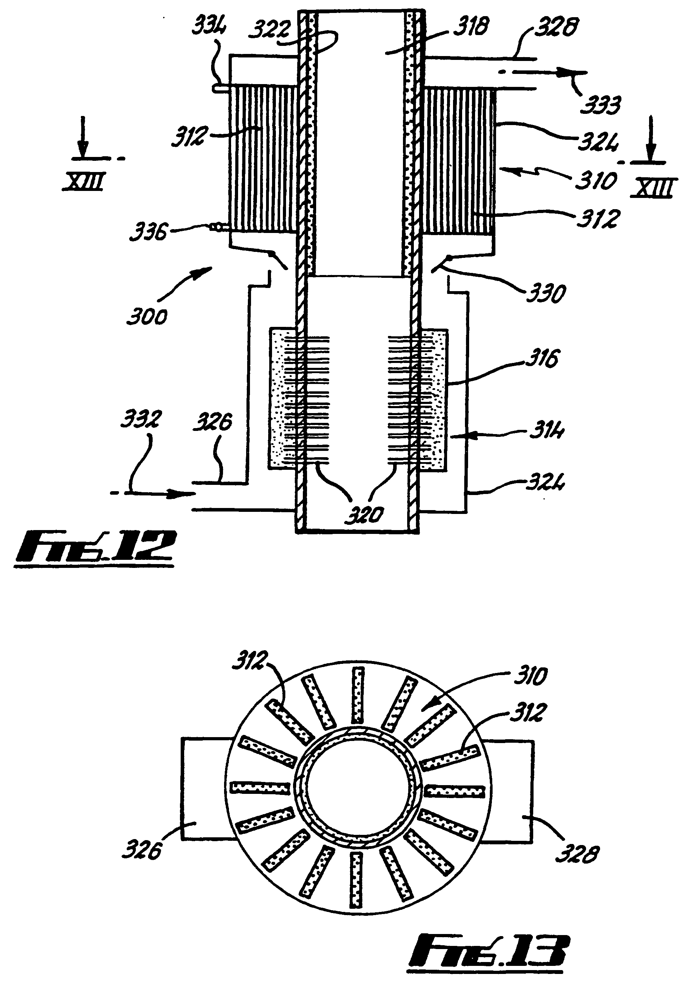

Referring to Fig. 11, there is shown cooling apparatus 200 in which direct evaporative cooling is employed. The apparatus 200 includes heat transfer apparatus 210 comprising a plurality of porous members 212 inside a pipe 230. Water supply means, comprising a plurality of conduits 216, supplies water to the porous members 212, and drain means, in the form of conduits 218, drains unevaporated water therefrom. Upstream of the heat transfer apparatus 210 is an absorber 220 comprising a plurality of porous members 222. An absorbent suitable for absorbing water is supplied to the porous members 222 via conduits 226. The absorbent, and any water absorbed thereby is drained from the porous members 226 via conduits 226.

In operation, air passing through the pipe 230 in the direction indicated by the arrow 232 and passes over the porous members 222 of the absorber 220. Water carried by the air is absorbed into the absorbent and heat of absorption is transferred to the air. The heated air travels, as shown by the arrow 234 to the porous members 212 of the heat transfer apparatus 210, whereby heat is extracted from the air on evaporation of the water from the porous members 212. Thus, water extracted by the absorber 220 is replaced by evaporation of water from the porous members 212. By providing appropriately shaped and sized porous members 214, the air passing over the porous members 212 can be cooled below the temperature of the air impinging on the absorber 220. The overall effect is that air leaving the conduit 230 as indicated by the arrow 236 is cooled relative to the air entering the conduit 230 and contains the same amount of water. Thus, the humidity in the room which is intended to be cooled by the apparatus 210 is not altered.

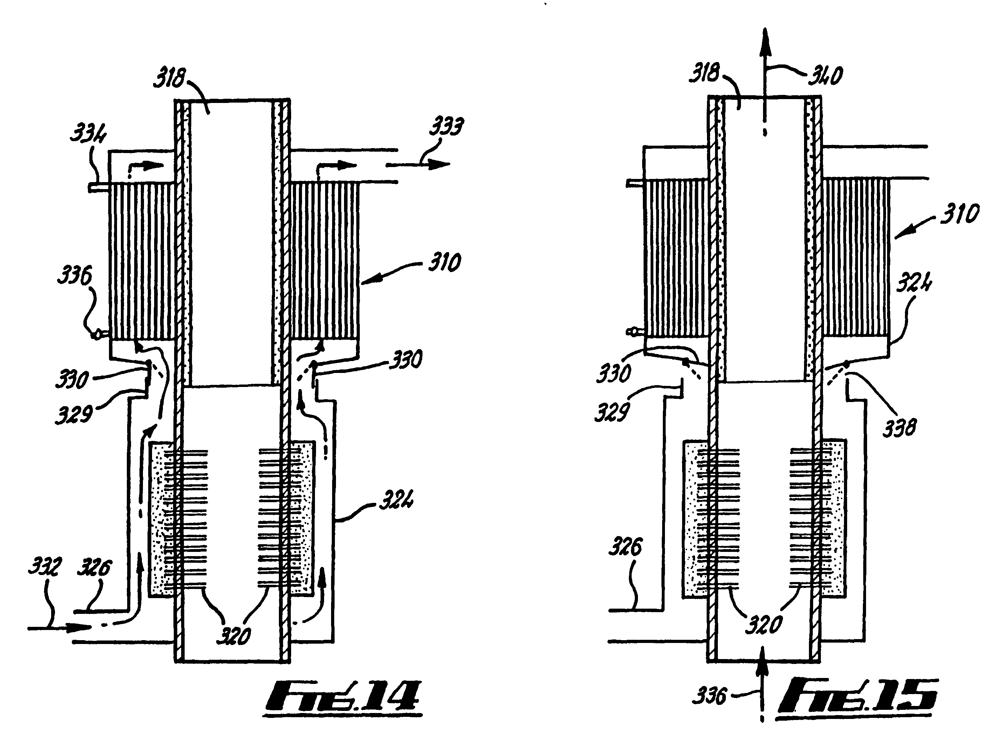

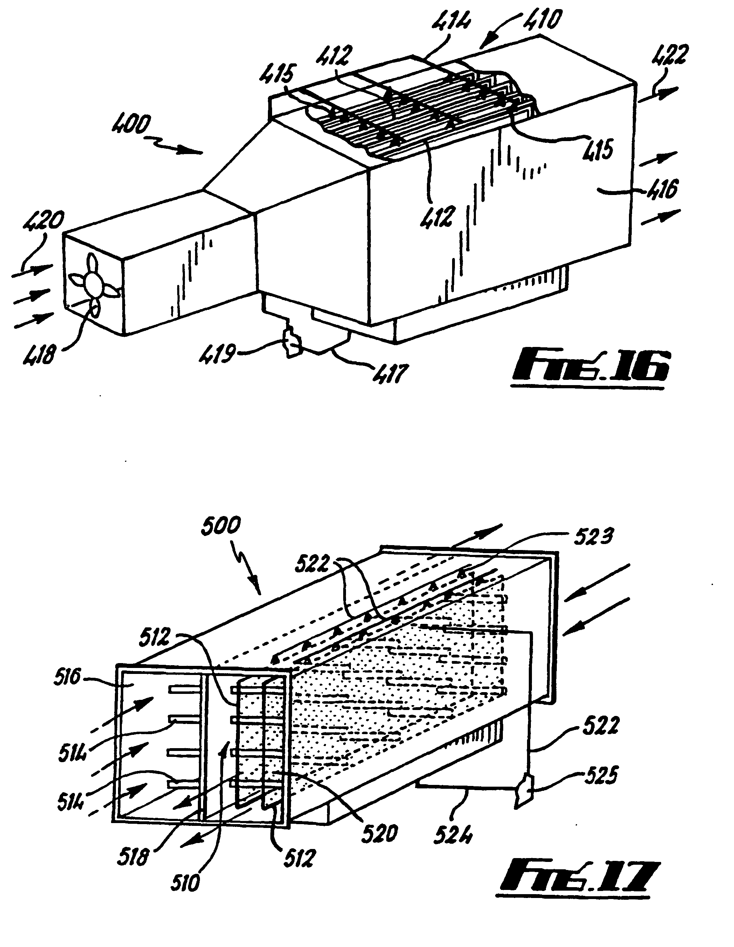

Referring to Figs. 12 to 15 there is shown a cooling assembly 300 which comprises heat transfer apparatus 310, consisting of a plurality of radially extending porous members in the form of panels 312.

Beneath the cooling apparatus 310 is provided drying apparatus 314 comprising a plurality of radially extending drying members 316, each containing a desiccant. The heat transfer apparatus 310 and the drying apparatus 314 are provided around a substantially cylindrical central conduit 318. Fins 320 extend from the members 316 into the central conduit 318. In the region of the central conduit adjacent the cooling apparatus 310, the internal walls of the central conduit 318 are provided with circumferentially extending thermal insulation 322.

Around the central conduit 318 and the cooling apparatus 310 and drying apparatus 314 there is provided a jacket 324 for a flow of air, the jacket 324 having an air supply pipe 326, and an air exhaust pipe 328.

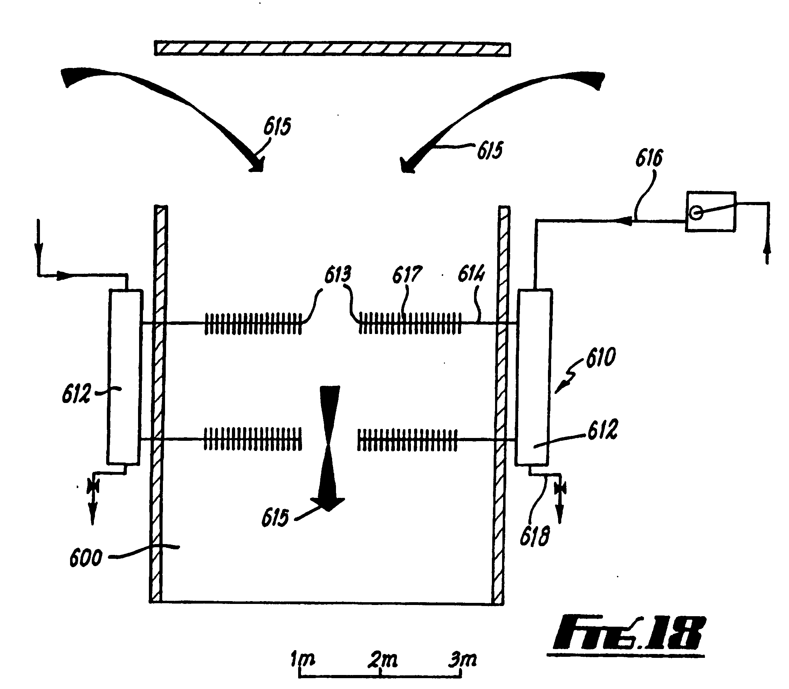

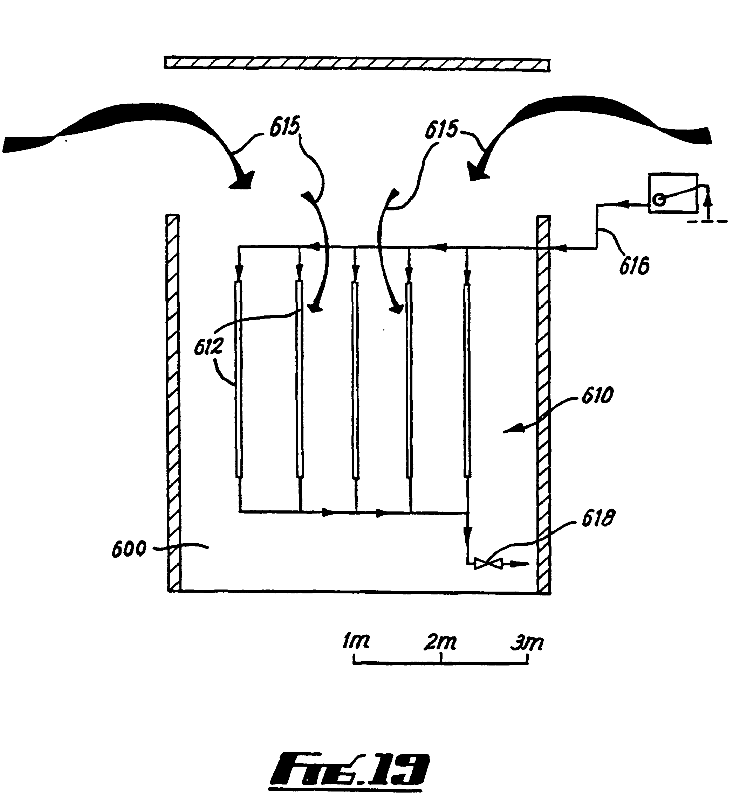

At a narrow region 329 of the jacket 324 between the cooling apparatus 312 and the drying apparatus 314 there is provided flaps 330 movable from a first position to allow air to pass from the drying apparatus 314 to the cooling apparatus 312 (see Fig. 14), and a second position (see Fig. 15) in which the flaps 330 direct air via an opening 338 and prevent air in the jacket 324 entering the cooling apparatus 310.

Referring to Fig. 14, which shows the apparatus 30 in cooling mode, air enters the bottom of the jacket 324 via the pipe 326, as indicated by the arrow 332. The air passes through the jacket 324 and over the drying members 326 which remove water from the air. Heat of absorption of water is transferred from the desiccant on the drying members 316 to the air. The air then passes through the narrow region 329 to the cooling apparatus 310. The air then passes over the porous members 312 causing water thereon to be evaporated. Hence, the air passing over the members 312 is cooled down, and the air takes up water from the members 312 to replace the water removed by the drying apparatus 314 and passes to the room to cool it. The air is then exhausted via the pipe 328 as indicated by the arrow 333.

Water supply means to supply water to the porous members 310, in the form of a conduit 334 is provided and drain means in the form of conduit 336 is provided to drain unevaporated water therefrom.

When the drying members are saturated with water, the flaps 330 are moved to the second position, as shown in Fig. 15, and heat is then supplied through the conduit 318. This heat can be derived from any suitable heat source, for example gas or exhaust heat from some other apparatus. The heat in the form of heated air enters at the lower end, as shown by the arrow 336 and passes over the fins 320. The heat is transferred via the fins 320 to the drying members 316 and causes the water absorbed by the desiccant to be evaporated therefrom. This water then passes out of the jacket 324 via the opening 338 left by the flaps 330 in the narrow region 329. When all the water has been driven from the desiccant on the drying members 316, the apparatus can be used again for cooling. The air passing through the central conduit 318 at the upper end as indicated by the arrow 340.

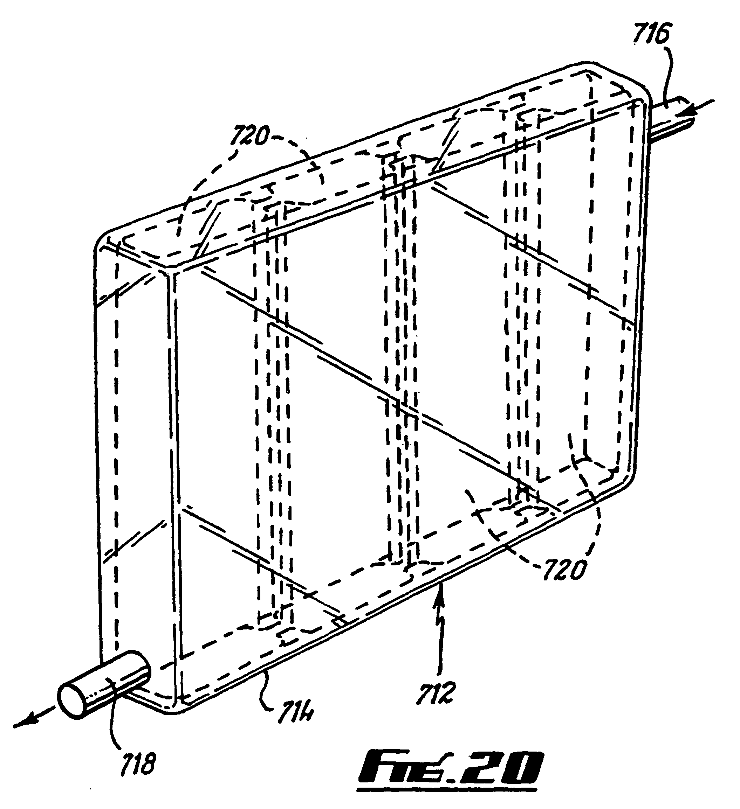

Referring to Fig. 16, there is shown a further cooling unit 400 which uses direct evaporative cooling. The unit 400 comprises cooling apparatus 410 in the form of a plurality of porous panels 412.

The unit 400 includes water supply means in the form of a plurality of supply conduits 414. The conduits 414 are provided with spray nozzles 415 to spray water over the panels 412. A casing 416 extends around the apparatus 400. Recycling means in the form of further conduits 417 and a pump 419 recycle excess water back to the supply conduits 414. Mains water (not shown) is also provided to replenish the water provided to the supply conduits 414.

A fan 418 drives air from outside, as shown by the arrows 420 into the unit 400. The air passes over the porous panels, thereby evaporating water thereon which, thus, cools the air. The air exits the unit at the opposite end, as shown by the arrows 422. The air exiting, as shown by the arrows 422 is cooled moist air.

Referring to Fig. 17, there is shown a further embodiment according to the invention, in which indirect evaporative cooling is used. The embodiment shown in Fig. 17 comprises a cooling unit 500 comprising cooling apparatus 510. The cooling apparatus 510 comprises a two adjacent porous panels 512 arranged parallel to each other. The porous panels 512 are provided with a plurality of heat pipes 514, which extend to both of the panels 512.

The unit 500 is divided into a first section 516 for supplying cool air to a room. The heat pipes 514 extend from a dividing wall 518 into the first section 516. A second section 520 is defined on the opposite side of the wall 518 to the first section 516. The porous panels 520 are provided in the second section 520. The heat pipes 514 extend from the dividing wall 518 to the panels 520. Thus, the heat pipes 514 extend from the first section 516, through the dividing wall 518 to the second section 520 and are in engagement with both porous panels 512.

The unit 500 comprises water supply means which includes a plurality of supply conduits 522 having nozzles 523 which spray water over the panels 512. Recycling means comprising further conduits 524 and a pump 525 is provided to recycle any water not evaporated from the panels back to the water supply conduits 522. A mains supply of water (not shown) may be connected to the water supply means to replenish the water lost by evaporation.

In operation, warm air passes over the panels 512 to cool the evaporation of water therefrom. This air is cooled and carries with it the water vapour evaporated from the porous members 512.

At the same time, warm air is passed through the first section 516, to impinge on the heat pipes 514, whereby heat is extracted by the heat pipes 514, in the same manner as described for the embodiments above and transferred to the porous members 512. Thus, the air is cooled as it passes through the first section 516, whereby air exiting the first section 516 is cooled sufficiently to enable it to enter a room and provide suitable air conditioning.

Referring to Fig. 18, there is shown a further embodiment of apparatus 610 according to the invention for cooling a room 600. The apparatus 610 comprises a plurality of porous panels 612 provided adjacent the wall outside the room.

At least one heat pipe 614 extends from each of the porous panels 612 through the walls of the room 600 to the inside of the room 600. Thus, evaporation of water from the porous panel 612 causes heat to be extracted from the air passing over the heat pipe 614, thereby cooling such air to enable the building to be cooled. The passage of air is indicated by the arrows 615. The end regions 613 of the heat pipes 614, extending into the room 600, are provided with fins 617 to enhance the transfer of heat from the air in the room 600 to the heat pipes 614. In an alternative embodiment, the heat pipes 614 can be replaced by chilled water cooling coils through which water, chilled in the porous panels 612, is passed. The chilled water passing through the coils would cool the air flow. Consequently, the coils may function as a condensor, condensing water from the air flow. Drip trays would be required to collect such condensed water.

Water supply means 616 supplies water to the porous panels 612, and drain means 618 drains unevaporated water therefrom.

Referring to Fig. 19, there is shown apparatus similar to that shown in Fig. 18, and the same features as shown in Fig. 18 are designated with the same reference numerals with the exception that cooling is effected by direct cooling and the porous members 612 are provided inside the building. Theair entering the building as shown by the arrows 615 passes directly over the porous members. The porous members are in the form of panels 612, whereby as the air passes over each panel 612 water thereon is evaporated, and the air is cooled, and takes up the water, whereby cold moist air is passed to the remainder of the building.

Referring to Fig. 20, there is shown a porous panel 712 which could be used in the apparatus shown in Figs. 12 to 15, as the porous panels 312, or in Fig. 17, as the porous panel 512, or in Figs. 18 and 19 as the porous panels 612. The panel 712 comprises a hollow main body 714 which is closed with the exception of an inlet 716 for a supply of water to the main body 714, and an outlet 718 to drain water from the main member 714. A plurality of channels 720 are defined within the main body 714 to allow water to be dispersed throughout the main body, whereby it can permeate through the walls of the main member 714 throughout the main member 714.

The main body 714 is formed of a suitable porous member, for example a ceramic.

The panel 712 is made as thin as possible so that the minimum volume of water is required to ensure complete permeation of the walls of the main body by water.

Various modifications can be made without departing from the scope of the invention. For example, the porous members could have different shapes to those described.

## Claims

1. Heat transfer apparatus for cooling a medium, the apparatus comprising a porous member for holding a refrigerant and allowing the refrigerant to evaporate therefrom to cool the refrigerant held by the porous member, and a heat pipe having first and second end regions, the first end region being arranged in thermal communication with the porous member and the second end region being arrangeable in thermal communication with the medium to be cooled, whereby evaporation of the refrigerant from the porous member cools the first end region of the heat pipe to cause the heat pipe to transfer heat from the second end region to the first end region thereby transferring heat from the medium and cooling said medium.

2. Cooling apparatus according to claim 1 wherein the porous member is arranged in thermal communication with the medium.

3. Cooling apparatus according to claim 1 or 2 pipe including fins on the heat pipe to assist in the transfer of heat.

4. Cooling apparatus according to any preceding claim further including refrigerant supply means to supply refrigerant to the porous member for evaporation therefrom.

5. Cooling apparatus according to claim 4 wherein the refrigerant supply means comprises a conduit to supply said refrigerant to the refrigerant holding means.

6. Cooling apparatus according to claim 4 or 5 wherein the refrigerant supply means includes means to spray said refrigerant over refrigerant holding means.

7. Cooling apparatus according to any preceding claim further including means for supplying the medium to said heat pipe for the aforesaid transfer of heat.

8. Cooling apparatus according to claim 7 wherein the means for supplying the medium includes a conduit

9. Cooling apparatus according to any preceding claim including drive means to drive the medium over the porous member.

10. Cooling apparatus according to claim 9 wherein the drive means comprises a fan.

11. Cooling apparatus according to any preceding Claim wherein the porous member is in the form of a container.

12. Cooling apparatus according to Claim 11 wherein the container is cylindrical and the heat pipe extends from one end region thereof.

13. Cooling apparatus according to any of Claims 1 to 12 wherein the porous member is in the form of a panel, the heat pipe extending from the panel to said medium.

14. Cooling apparatus according to Claim 13 wherein the panel has opposite faces and an edge, to heat pipe extending from at least one of the faces.

15. Cooling apparatus according to Claim 13 or 14 including a plurality of said heat pipes extending from the panel to said medium.

16. A method of cooling a medium, said method comprising providing apparatus as claimed in any preceding claim, arranging said heat pipe in thermal communication with the medium, providing a refrigerant on the porous member whereby evaporation of the refrigerant from The porous member, cools the first end of the heat pipe to cause the heat pipe to transfer heat from the second end to the first end, thereby transferring heat from the medium and cooling the medium.

17. A method according to claim 16 wherein the medium is in an enclosed space or is in a conduit communicating with the enclosed space.

18. A method according to claim 17 wherein the enclosed space comprises a room in a building, or a box to be kept cold.

19. A method according to claim 17 or 18, wherein the porous member is arranged is outside the enclosed space in indirect thermal communication with said enclosed space via said heat pipe.

20. The use of apparatus as claimed in any of claims 1 to 15 for cooling a medium, comprising providing said apparatus, arranging said heat pipe in thermal communication with the medium, providing a refrigerant on the porous member means whereby evaporation of the refrigerant from the porous member cools the first end of the heat pipe to cause the heat pipe to transfer heat from the second end to the first end, thereby transferring heat from the medium and cooling the medium.

## Patentansprüche

1. Wärmeübertragungsgerät zum Kühlen eines Mediums, wobei das Gerät aufweist: ein poröses Glied zum Aufnehmen bzw. Halten eines Kühlmittels und zum Ermöglichen des Verdampfens des Kühlmittels aus ihm, um das von dem porösen Glied aufgenommene bzw. gehaltene Kühlmittel zu kühlen; und ein Wärmerohr mit einem ersten Endbereich und einem zweiten Endbereich, wobei der erste Endbereich in thermischer Verbindung mit dem porösen Glied angeordnet ist und der zweite Endbereich in thermischer Verbindung mit dem zu kühlenden Medium anordenbar ist, und wobei eine Verdampfung des Kühlmittels aus dem porösen Glied den ersten Endbereich des Wärmerohres kühlt, um zu bewirken, dass das Wärmerohr Wärme aus dem zweiten Endbereich zu dem ersten Endbereich überträgt, wodurch Wärme aus dem Medium übertragen und das Medium gekühlt wird.

2. Kühlgerät nach Anspruch 1, **dadurch gekennzeichnet, dass** das poröse Glied in thermischer Verbindung mit dem Medium angeordnet ist.

3. Kühlgerät nach Anspruch 1 oder 2, **dadurch gekennzeichnet, dass** an der Innenseite des Wärmerohrs Rippen zur Unterstützung der Wärmeübertragung enthalten sind.

4. Kühlgerät nach einem der vorhergehenden Ansprüche, **dadurch gekennzeichnet, dass** es außerdem ein Kühlmittel-Zufuhrmittel enthält, um dem porösen Glied Kühlmittel zur Verdampfung von ihm zuzuführen.

5. Kühlgerät nach Anspruch 4, **dadurch gekennzeichnet, dass** das Kühlmittel-Zufuhrmittel eine Leitung aufweist, um das Kühlmittel dem Kühlmittel-Aufnahmemittel bzw. dem Kühlmittel-Haltemittel zuzuführen.

6. Kühlgerät nach Anspruch 4 oder 5, **dadurch gekennzeichnet, dass** das Kühlmittel-Zufuhrmittel ein Mittel zum Sprühen des Kühlmittels auf das Kühlmittel-Haltemittel aufweist.

7. Kühlgerät nach einem der vorhergehenden Ansprüche, **dadurch gekennzeichnet, dass** es außerdem ein Mittel zum Zuführen des Mediums zu dem Wärmerohr für die genannte Wärmeübertragung aufweist.

8. Kühlgerät nach Anspruch 7, **dadurch gekennzeichnet, dass** das Mittel zum Zuführen des Mediums eine Leitung enthält.

9. Kühlgerät nach einem der vorhergehenden Ansprüche, **dadurch gekennzeichnet, dass** es ein Antriebsmittel enthält, um das Medium über die poröse Membran anzutreiben.

10. Kühlgerät nach Anspruch 9, **dadurch gekennzeichnet, dass** das Antriebsmittel ein Gebläse aufweist.

11. Kühlgerät nach einem der vorhergehenden Ansprüche, **dadurch gekennzeichnet, dass** das poröse Mittel in Form eines Behälters vorliegt.

12. Kühlgerät nach Anspruch 11, **dadurch gekennzeichnet, dass** der Behälter zylindrisch ist und das Wärmerohr sich von dessen Endbereich aus erstreckt.

13. Kühlgerät nach einem der Ansprüche 1 bis 12, **dadurch gekennzeichnet, dass** das poröse Glied in Form einer Tafel bzw. Platte vorliegt, wobei sich das Wärmerohr von der Tafel bzw. Platte zu dem Medium hin erstreckt.

14. Kühlgerät nach Anspruch 13, **dadurch gekennzeichnet, dass** die Tafel bzw. Platte gegenüberliegende Flächen und eine Kante hat, wobei sich das Wärmerohr von mindestens einer der Flächen aus erstreckt.

15. Kühlgerät nach Anspruch 13 oder 14, **dadurch gekennzeichnet, dass** es eine Vielzahl von Wärmerohren enthält, die sich von der Tafel bzw. Platte zu dem Medium hin erstrecken.

16. Verfahren zum Kühlen eines Mediums mit den Schritten:
Bereitstellen eines Geräts gemäss einem der vorhergehenden Ansprüche; Anordnen des Wärmerohres in thermischer Verbindung mit dem Medium; Bereitstellen eines Kühlmittels an dem porösen Glied, wodurch eine Verdampfung des Kühlmittels von dem porösen Glied das erste Ende des Wärmerohres kühlt, um zu bewirken, dass das Wärmerohr Wärme von dem zweiten Ende zu dem ersten Ende überträgt, wodurch Wärme von dem Medium übertragen und das Medium gekühlt wird.

17. verfahren nach Anspruch 16, **dadurch gekennzeichnet, dass** sich das Medium in einem umschlossenen Raum oder in einer mit dem umschlossenen Raum kommunizierenden Leitung angeordnet ist.

18. Verfahren nach Anspruch 17, **dadurch gekennzeichnet, dass** der umschlossene Raum ein Zimmer in einem Gebäude oder einen zu kühlenden Kasten aufweist.

19. Verfahren nach Anspruch 17 oder 18, **dadurch gekennzeichnet, dass** das poröse Glied außerhalb des umschlossenen Raums über das Wärmerohr in indirekter thermischer Verbindung mit dem umschlossenen Raum angeordnet ist.

20. Verwendung des Geräts gemäss einem der Ansprüche 1 bis 15 zum Kühlen eines Mediums mit den Schritten:
Bereitstellen des Geräts; Anordnen des Wärmerohres in thermischer Verbindung mit dem Medium; Bereitstellen eines Kühlmittels an dem porösen Glied, wodurch eine Verdampfung des Kühlmittels von dem porösen Glied das erste Ende des Wärmerohres kühlt, um zu bewirken, dass das Wärmerohr Wärme von dem zweiten Ende zu dem ersten Ende Überträgt, wodurch Wärme von dem Medium übertragen und das Medium gekühlt wird.

## Revendications

1. Appareil d'échange de chaleur pour refroidir un milieu, l'appareil comprenant un élément poreux pour contenir un fluide frigorigène et permettre au fluide frigorigène de s'évaporer à partir de lui pour refroidir le fluide frigorigène contenu par l'élément poreux, et un tube de chaleur présentant une première et un deuxième régions d'extrémité, la première région d'extrémité étant agencée de façon à se trouver en communication thermique avec l'élément poreux et la deuxième région d'extrémité pouvant être agencée de façon à se trouver en communication thermique avec le milieu qui doit être refroidi, moyennant quoi l'évaporation du fluide frigorigène à partir de l'élément poreux refroidit la première région d'extrémité du tube de chaleur de façon à amener le tube de chaleur à transférer la chaleur depuis la deuxième région d'extrémité vers la première région d'extrémité, transférant ainsi la chaleur depuis le milieu et refroidissant ledit milieu.

2. Appareil de refroidissement selon la revendication 1 dans lequel l'élément poreux est agencé de façon à se trouver en communication thermique avec le milieu.

3. Appareil de refroidissement selon la revendication 1 ou 2 comprenant des ailettes sur le tube de chaleur afin de faciliter le transfert de chaleur.

4. Appareil de refroidissement selon l'une quelconque des revendications précédentes comprenant en outre des moyens de fourniture de fluide frigorigène pour fournir du fluide frigorigène à l'élément poreux pour l'évaporation à partir de lui.

5. Appareil de refroidissement selon la revendication 4 dans lequel les moyens de fourniture de fluide frigorigène comprennent un tuyau pour fournir ledit fluide frigorigène aux moyens de contenance de fluide frigorigène.

6. Appareil de refroidissement selon la revendication 4 ou 5 dans lequel les moyens de fourniture de fluide frigorigène comprennent des moyens pour pulvériser ledit fluide frigorigène sur les moyens de contenance de fluide frigorigène.

7. Appareil de refroidissement selon l'une quelconque des revendications précédentes comprenant en outre des moyens pour fournir le milieu au dit tube de chaleur en vue du transfert de chaleur susmentionné.

8. Appareil de refroidissement selon la revendication 7 dans lequel les moyens de fourniture du milieu comprennent un tuyau.

9. Appareil de refroidissement selon l'une quelconque des revendications précédentes comprenant des moyens d'entraînement pour entraîner le milieu sur l'élément poreux.

10. Appareil de refroidissement selon la revendication 9 dans lequel les moyens d'entraînement comprennent un ventilateur.

11. Appareil de refroidissement selon l'une quelconque des revendications précédentes dans lequel l'élément poreux se présente sous la forme d'un récipient.

12. Appareil de refroidissement selon la revendication 11 dans lequel le récipient est cylindrique et le tube de chaleur s'étend depuis une région d'extrémité de celui-ci.

13. Appareil de refroidissement selon l'une quelconque des revendications 1 à 12 dans lequel l'élément poreux se présente sous la forme d'un panneau, le tube de chaleur s'étendant depuis le panneau vers ledit milieu.

14. Appareil de refroidissement selon la revendication 13 dans lequel le panneau présente des faces opposées et un bord, pour chauffer le tube qui s'étend depuis au moins une des faces.

15. Appareil de refroidissement selon la revendication 13 ou 14 comprenant une pluralité desdits tubes de chaleur s'étendant depuis le panneau vers ledit milieu.

16. Procédé de refroidissement d'un milieu, ledit procédé comprenant les étapes consistant à : fournir un appareil selon l'une quelconque des revendications précédentes, agencer ledit tube de chaleur en communication thermique avec le milieu, fournir un fluide frigorigène sur l'élément poreux, moyennant quoi l'évaporation du fluide frigorigène à partir de l'élément poreux refroidit la première extrémité du tube de chaleur de façon à amener le tube de chaleur à transférer la chaleur depuis la deuxième extrémité vers la première extrémité, transférant ainsi la chaleur depuis le milieu et refroidissant le milieu.

17. Procédé selon la revendication 16 dans lequel le milieu est un espace clos ou se trouve à l'intérieur d'un conduit qui communique avec l'espace clos.

18. Procédé selon la revendication 17 dans lequel l'espace clos comprend une pièce dans un bâtiment, ou un compartiment qui doit être maintenu froid.

19. Procédé selon la revendication 17 ou 18, dans lequel l'élément poreux est agencé à l'extérieur de l'espace clos en communication thermique indirecte avec ledit espace clos par le biais dudit tube de chaleur.

20. Utilisation de l'appareil selon l'une quelconque des revendications 1 à 15 pour refroidir un milieu comprenant les étapes consistant à : fournir ledit appareil, agencer ledit tube de chaleur de façon à ce qu'il se trouve en communication thermique avec le milieu, fournir un fluide frigorigène sur l'élément poreux, moyennant quoi l'évaporation du fluide frigorigène à partir de l'élément poreux refroidit la première extrémité du tube de chaleur de façon à amener le tube de chaleur à transférer la chaleur depuis la deuxième extrémité vers la première extrémité, transférant ainsi la chaleur depuis le milieu et refroidissant le milieu.
